# EUROPÄISCHE PATENTSCHRIFT

(11) **EP 3 612 741 B1**
(45) Veröffentlichungstag und Bekanntmachung des Hinweises auf die Patenterteilung: **21.04.2021**
(21) Anmeldenummer: 18713827.6
(22) Anmeldetag: 19.03.2018
(51) Int. Cl.: F16C 11/06

(54) **VERFAHREN ZUR HERSTELLUNG EINES KUGELGELENKS**
METHOD FOR MANUFACTURING A BALL JOINT
PROCÉDÉ DE FABRICATION D'UN JOINT À ROTULE

(30) Priorität: 20.04.2017 DE 102017206706
(43) Veröffentlichungstag der Anmeldung: 26.02.2020
(73) Patentinhaber: ZF Friedrichshafen AG, 88046 Friedrichshafen (DE)
(72) Erfinder: SIEVE, Manfred, 49393 Lohne (DE); PABST, Jan, 49082 Osnabrück (DE); NACHBAR, Frank, 49088 Osnabrück (DE); GRUBE, Volker, 49356 Diepholz (DE)
(74) Vertreter: ZF Friedrichshafen AG
(86) Internationale Anmeldenummer: PCT/EP2018/056810
(87) Internationale Veröffentlichungsnummer: WO 2018/192728

(56) Entgegenhaltungen:
- EP-A1- 3 023 652
- DE-C1- 10 110 738
- DE-T5-112007 002 148

## Beschreibung

Die Erfindung betrifft ein Verfahren zur Herstellung eines Kugelgelenks, welches ein mit einer Außengehäusezapfenöffnung versehenes Außengehäuse, ein in dem Außengehäuse angeordnetes und mit einer Innengehäusezapfenöffnung versehenes Innengehäuse und einen eine Gelenkkugel umfassenden Kugelzapfen aufweist, der mit seiner Gelenkkugel beweglich in dem Innengehäuse gelagert ist und sich durch die Innengehäusezapfenöffnung hindurch aus dem Innengehäuse heraus erstreckt, wobei der Kugelzapfen in das Außengehäuse eingebracht und mit seiner Gelenkkugel in diesem positioniert wird, sodass zwischen dem Außengehäuse und dem Kugelzapfen ein die Gelenkkugel und/oder den Kugelzapfen umringender Freiraum verbleibt und sich der Kugelzapfen durch die Außengehäusezapfenöffnung hindurch aus dem Außengehäuse heraus erstreckt, wonach der Freiraum mit einer Kunststoffmasse gefüllt und dabei die Gelenkkugel mit der Kunststoffmasse umschlossen wird, die anschließend aushärtet und im ausgehärteten Zustand das Innengehäuse bildet.

Ein derartiges Verfahren ist z.B. aus der EP 3 023 652 A1 bekannt. Nachteilig hieran ist, dass die Kunststoffmasse nicht auf ihre Gleiteigenschaften hin optimierbar ist. Dies legt daran, dass Kunststoffmassen, die zu einer optimalen Gleitreibung zwischen dem Innengehäuse und der Gelenkkugel führen, während des Aushärtens stark schrumpfen, sodass das Innengehäuse nach dem Aushärten nicht mehr fest in dem Außengehäuse sitzt. Aus diesem Grund werden in Praxis Kunststoffmassen gewählt, die nicht oder lediglich geringfügig schrumpfen. Derartige Kunststoffmassen führen aber nicht zu optimalen Ergebnissen in Bezug auf die Gleitreibung zwischen dem Innengehäuse und der Gelenkkugel.

Ausgehend hiervon liegt der Erfindung die Aufgabe zugrunde, die Gleiteigenschaften zwischen dem Innengehäuse und der Gelenkkugel verbessern und dennoch einen festen Sitz des Innengehäuses in dem Außengehäuse gewährleisten zu können.

Diese Aufgabe wird durch ein Verfahren nach Anspruch 1 gelöst. Bevorzugte Weiterbildungen des Verfahrens sind in den Unteransprüchen und in der nachfolgenden Beschreibung gegeben.

Das eingangs genannte Verfahren zur Herstellung eines Kugelgelenks, welches ein mit einer Außengehäusezapfenöffnung versehenes Außengehäuse, ein in dem Außengehäuse angeordnetes und mit einer Innengehäusezapfenöffnung versehenes Innengehäuse und einen eine Gelenkkugel umfassenden Kugelzapfen aufweist, der mit seiner Gelenkkugel beweglich in dem Innengehäuse gelagert ist und sich durch die Innengehäusezapfenöffnung hindurch aus dem Innengehäuse heraus erstreckt, wobei
- der Kugelzapfen in das Außengehäuse eingebracht und mit seiner Gelenkkugel in diesem positioniert wird, sodass zwischen dem Außengehäuse und dem Kugelzapfen ein die Gelenkkugel und/oder den Kugelzapfen umringender Freiraum verbleibt und sich der Kugelzapfen durch die Außengehäusezapfenöffnung hindurch aus dem Außengehäuse heraus erstreckt,
- wonach der Freiraum mit einer Kunststoffmasse gefüllt und dabei die Gelenkkugel mit der Kunststoffmasse umschlossen wird, die anschließend aushärtet und im ausgehärteten Zustand das Innengehäuse bildet,
- wird insbesondere dadurch weitergebildet, dass ein sich beim Aushärten der Kunststoffmasse zwischen dem Außengehäuse und dem Innengehäuse bildender Spalt nach dem Aushärten durch Komprimieren des Außengehäuses, insbesondere dauerhaft, geschlossen wird.

Das Außengehäuse wird durch das Komprimieren derart verformt oder umgeformt, dass sich der Spalt zwischen dem Außengehäuse und dem Innengehäuse schließt. Das Innengehäuse sitzt somit fest in dem Außengehäuse. Da durch das Schließen des Spalts nach dem Aushärten ein Schrumpfen der Kunststoffmasse während des Aushärtens zulässig ist, kann für die Kunststoffmasse ein Kunststoff eingesetzt werden, der eine geringe Gleitreibung zwischen dem Innengehäuse und der Gelenkkugel ermöglicht. Vorzugsweise wird das Außengehäuse durch das Komprimieren plastisch und/oder dauerhaft verformt.

Vorzugsweise ist im Rahmen der vorliegenden Anmeldung unter einem Aushärten ein Abkühlen und/oder unter einem ausgehärteten Zustand ein abgekühlter Zustand zu verstehen. Insbesondere ist unterem einem Aushärten und/oder Abkühlen ein hart werden der Kunststoffmasse bei einer gleichbleibenden Temperatur zu verstehen. Vorzugsweise erfolgt das Aushärten aufgrund eines Abkühlens der Kunststoffmasse. Somit kann eine erwärmte oder heiße Kunststoffmasse abgekühlt werden, wodurch ein Aushärten der Kunststoffmasse erreichbar ist.

Das Außengehäuse erstreckt sich bevorzugt in einer axialen Richtung. Insbesondere ist dem Außengehäuse eine sich in der axialen Richtung erstreckende Mittelachse zugeordnet. Vorteilhaft umfasst das Außengehäuse eine die Mittelachse umringende Außengehäusewandung. Bevorzugt ist das Außengehäuse bezüglich der Mittelachse rotationssymmetrisch oder im Wesentlichen rotationssymmetrisch ausgebildet. Vorteilhaft ist die Außengehäusewandung, insbesondere an ihrem Innenumfang, zylindrisch oder im Wesentlichen zylindrisch ausgebildet. Vorzugsweise erfolgt das Komprimieren des Außengehäuses durch eine Durchmesserreduzierung der Außengehäusewandung.

Das Innengehäuse erstreckt sich bevorzugt in axialer Richtung. Vorteilhaft umfasst das Innengehäuse eine die Mittelachse umringende Innengehäusewandung. Vorteilhaft ist das Innengehäuse bezüglich der Mittelachse rotationssymmetrisch oder im Wesentlichen rotationssymmetrisch ausgebildet. Vorzugsweise ist die Innengehäusewandung, insbesondere an ihrem Innenumfang, kugelförmig oder teilkugelförmig oder im Wesentlichen kugelförmig oder teilkugelförmig ausgebildet. Bevorzugt ist die Innengehäusewandung, insbesondere an ihrem Außenumfang, zylindrisch oder im Wesentlichen zylindrisch ausgebildet. Insbesondere bildet sich der Spalt zwischen der Außenumfangsfläche der Innengehäusewandung und der Innenumfangsfläche der Außengehäusewandung. Vorteilhaft liegt, insbesondere nach dem Komprimieren, die Innengehäusewandung mit ihrer Außenumfangsfläche an der Innenumfangsfläche der Außengehäusewandung an. Vorzugsweise wird durch das Komprimieren des Außengehäuses die Außengehäusewandung mit ihrer Innenumfangsfläche an die Außenumfangsfläche der Innengehäusewandung angelegt.

Eine oder jedwede quer zur axialen Richtung und/oder zur Mittelachse verlaufende Richtung wird insbesondere als radiale Richtung bezeichnet. Das Komprimieren des Außengehäuses ist vorzugsweise ein radiales Komprimieren und/oder erfolgt vorzugweise in radialer Richtung. Die Durchmesserreduzierung der Außengehäusewandung ist bevorzugt eine radiale Durchmesserreduzierung und/oder erfolgt bevorzugt in radialer Richtung. Vor dem Komprimieren erstreckt sich der Spalt insbesondere in radialer Richtung. Beispielsweise bildet der Spalt vor dem Komprimieren ein um die Mittelachse und/oder um das Innengehäuse herum verlaufenden Ringraum.

Das Außengehäuse wird insbesondere hergestellt und/oder bereitgestellt. Bevorzugt besteht das Außengehäuse aus Metall. Vorzugsweise wird das Außengehäuse aus Metall hergestellt. Insbesondere handelt es sich bei diesem Metall um Stahl oder um Aluminium. Vorteilhaft besteht das Außengehäuse aus Blech. Bevorzugt wird das Außengehäuse aus Blech hergestellt. Bei diesem Blech handelt es sich vorzugsweise um Metallblech, wie z.B. um Stahlblech oder um Aluminiumblech.

Der Kugelzapfen wird insbesondere hergestellt und/oder bereitgestellt. Bevorzugt besteht der Kugelzapfen aus Metall. Vorzugsweise wird der Kugelzapfen aus Metall hergestellt. Insbesondere handelt es sich bei diesem Metall um Stahl oder um Edelstahl oder um Titan. Der Kugelzapfen weist insbesondere einen Zapfen auf. Bevorzugt ist der Zapfen fest und/oder starr mit der Gelenkkugel verbunden. Vorteilhaft ist die Gelenkkugel an einem Ende des Zapfens angeordnet und/oder die Gelenkkugel bildet ein Ende des Kugelzapfens. Vorzugsweise ist dem Kugelzapfen eine Kugelzapfenlängsachse zugeordnet, die insbesondere durch den Mittelpunkt der Gelenckugel verläuft. Bevorzugt ist der Kugelzapfen bezüglich der Kugelzapfenachse rotationssymmetrisch oder im Wesentlichen rotationssymmetrisch. Das dem Zapfen, insbesondere in Richtung der Kugelzapfenachse, abgewandte Ende der Gelenkkugel wird vorzugsweise als Pol oder Polbereich bezeichnet. Beispielsweise ist die Gelenckugel im Polbereich flach und/oder nicht kugelförmig ausgebildet. Bevorzugt erstreckt sich der Kugelzapfen durch die Außengehäusezapfenöffnung hindurch aus dem Außengehäuse heraus. Insbesondere erstreckt sich der Kugelzapfen durch die Zapfenöffnungen hindurch aus den Gehäusen heraus. Die Mittelachse verläuft bevorzugt durch den Mittelpunkt der Gelenkkugel. Insbesondere wird der Kugelzapfen in das Außengehäuse eingebracht und mit seiner Gelenkkugel in diesem gelagert, sodass die Mittelachse durch den Mittelpunkt der Gelenkkugel verläuft.

Das Innengehäuse besteht bevorzugt aus Kunststoff. Vorzugsweise wird das Innengehäuse aus Kunststoff und/oder aus der Kunststoffmasse hergestellt. Insbesondere handelt es sich bei dem Kunststoff und/oder bei der Kunststoffmasse um Polyamid (PA) oder um Polyoxymethylen (POM). Vorteilhaft ist oder wird der Kunststoff und/oder die Kunststoffmasse mit Fasern versetzt und/oder verstärkt. Bei den Fasern handelt es sich z.B. um Glasfasern oder um Kohlenstofffasern.

Gemäß einer Weiterbildung wird vor dem Füllen des Freiraums mit der Kunststoffmasse ein die Außengehäusezapfenöffnung begrenzendes Ende des Außengehäuses nach Innen oder radial Innen umgebogen, wonach dieses Ende beim Füllen des Freiraums mit der Kunststoffmasse in die Kunststoffmasse eingebettet wird. Bevorzugt wird hierdurch das Innengehäuse, insbesondere in axialer Richtung, formschlüssig an und/oder in dem Außengehäuse gesichert. Bei dem die Außengehäusezapfenöffnung begrenzenden Ende des Außengehäuses handelt es sich insbesondere um ein axiales Ende des Außengehäuses.

Gemäß einer Ausgestaltung wird vor dem Füllen des Freiraums mit der Kunststoffmasse ein der Außengehäusezapfenöffnung abgewandtes Ende des Außengehäuses nach Innen oder radial Innen umgebogen, wonach dieses Ende beim Füllen des Freiraums mit der Kunststoffmasse in die Kunststoffmasse eingebettet wird. Bevorzugt wird hierdurch das Innengehäuse, insbesondere in axialer Richtung, formschlüssig an und/oder in dem Außengehäuse gesichert. Bei dem der Außengehäusezapfenöffnung abgewandten Ende des Außengehäuses handelt es sich insbesondere um ein axiales Ende des Außengehäuses. Vorteilhaft begrenzt das der Außengehäusezapfenöffnung abgewandte Ende des Außengehäuses eine Montageöffnung des Außengehäuses.

Bevorzugt weist die Außengehäusezapfenöffnung einen Durchmesser auf, der kleiner als der Durchmesser der Gelenkkugel ist. Vorzugsweise wird das Außengehäuse derart hergestellt und/oder das die Außengehäusezapfenöffnung begrenzende Ende des Außengehäuses derart nach Innen oder radial Innen umgebogen, dass die Außengehäusezapfenöffnung einen Durchmesser aufweist, der kleiner als der Durchmesser der Gelenkkugel ist. Hierdurch wird vorteilhaft eine axiale Überdeckung der Gelenkkugel durch das nach Innen oder radial Innen umgebogene und die Außengehäusezapfenöffnung begrenzende Ende des Außengehäuses erzielt. Diese axiale Überdeckung steigert insbesondere die Auszugsfestigkeit des Kugelzapfens.

Bevorzugt weist die Montageöffnung einen Durchmesser auf, der größer oder gleich dem Durchmesser der Gelenkkugel ist. Vorzugsweise wird das Außengehäuse derart hergestellt und/oder das der Außengehäusezapfenöffnung abgewandte Ende des Außengehäuses derart nach Innen oder radial Innen umgebogen, dass die Montageöffnung einen Durchmesser aufweist, der größer oder gleich dem Durchmesser der Gelenkkugel ist. Somit ist der Kugelzapfen durch die Montageöffnung hindurch in das Außengehäuse einbringbar. Bevorzugt wird der Kugelzapfen durch die Montageöffnung hindurch und/oder durch das der Außengehäusezapfenöffnung abgewandte Ende des Außengehäuses hindurch in das Außengehäuse eingebracht.

Gemäß einer Variante wird das Außengehäuse, insbesondere an seinem der Außengehäusezapfenöffnung abgewandten Ende des Außengehäuses, mit einem Boden versehen. Insbesondere wird in dem Boden eine Einfüllöffnung vorgesehen, durch welche hindurch der Freiraum mit der Kunststoffmasse gefüllt wird. Bevorzugt weist die Außengehäusezapfenöffnung einen Durchmesser auf, der größer oder gleich dem Durchmesser der Gelenkkugel ist. Vorzugsweise wird das Außengehäuse derart hergestellt und/oder das die Außengehäusezapfenöffnung begrenzende Ende des Außengehäuses derart nach Innen oder radial Innen umgebogen, dass die Außengehäusezapfenöffnung einen Durchmesser aufweist, der größer oder gleich dem Durchmesser der Gelenkkugel ist. Somit ist der Kugelzapfen durch die Außengehäusezapfenöffnung hindurch in das Außengehäuse einbringbar. Bevorzugt wird der Kugelzapfen durch die Außengehäusezapfenöffnung hindurch und/oder durch das die Außengehäusezapfenöffnung begrenzende Ende des Außengehäuses hindurch in das Außengehäuse eingebracht.

Das Füllen des Freiraums mit einer Kunststoffmasse erfolgt insbesondere durch Gießen oder Spritzgießen. Beispielsweise wird die Kunststoffmasse in den Freiraum eingegossen oder eingespritzt. Bevorzugt erfolgt das Umschließen der Gelenkkugel mit der Kunststoffmasse durch Umgießen oder Umspritzen der Gelenkkugel mit der Kunststoffmasse. Insbesondere wird die Gelenkkugel mit der Kunststoffmasse umgossen oder umspritzt. Bevorzugt werden vor dem Füllen des Freiraums mit der Kunststoffmasse das Außengehäuse und der Kugelzapfen in ein Werkzeug eingesetzt oder eingebracht, welches vorzugsweise ein Gusswerkzeug oder Spritzgusswerkzeug ist. Insbesondere erfolgt das Füllen des Freiraums mit der Kunststoffmasse in dem Gusswerkzeug oder Spritzgusswerkzeug.

Gemäß einer Weiterbildung wird beim Füllen des Freiraums mit der Kunststoffmasse die Gelenkkugel bis auf einen den Kugelzapfen umringenden Zapfenöffnungsbereich mit der Kunststoffmasse umschlossen, der nach dem Aushärten die Innengehäusezapfenöffnung bildet. Der Zapfenöffnungsbereich wird insbesondere durch das Werkzeug belegt oder besetzt und somit vor einem Eindringen der Kunststoffmasse geschützt.

Bevorzugt wird beim Füllen des Freiraums mit der Kunststoffmasse ein den Zapfenöffnungsbereich und/oder den Kugelzapfen umringender und sich durch die Außengehäusezapfenöffnung hindurch aus dem Außengehäuse heraus erstreckender Anschlussbereich aus der Kunststoffmasse gebildet. Vorteilhaft wird der Anschlussbereich an seinem Außenumfang mit einer Ringnut versehen wird. Der Anschlussbereich und/oder die Ringnut dient insbesondere zum Befestigen eines Dichtungsbalgs. Bevorzugt wird an dem Anschlussbereich und/oder an oder in der Ringnut ein den Kugelzapfen umringender Dichtungsbalg befestigt, der sich vorzugsweise von dem Anschlussbereich und/oder der Ringnut bis zu dem Kugelzapfen erstreckt und insbesondere dichtend an diesem anliegt.

Gemäß einer Ausgestaltung wird vor dem Füllen des Freiraums mit der Kunststoffmasse die Gelenkkugel in einem der Außengehäusezapfenöffnung abgewandten Polbereich durch eine Polkappe abgedeckt, die beim Füllen des Freiraums mit der Kunststoffmasse in die Kunststoffmasse eingebettet wird. Insbesondere weicht die Gelenkkugel im Polbereich von der Kugelform ab. Dies ist beispielsweise herstellungsbedingt der Fall. Ohne Polkappe würde in diesem Fall die Kunststoffmasse die Gelenkkugel auch im Polbereich berühren und somit im ausgehärteten Zustand die Beweglichkeit der Gelenkkugel in dem Innengehäuse verhindern und/oder beeinträchtigen. Beispielsweise ist die Gelenkkugel in ihrem der Außengehäusezapfenöffnung abgewandten Polbereich flach ausgebildet. Die Polkappe wird insbesondere hergestellt und/oder bereitgestellt. Bevorzugt besteht die Polkappe aus Metall und/oder aus Kunststoff. Vorzugsweise wird die Polkappe aus Metall und/oder aus Kunststoff hergestellt. Bevorzugt wird vor dem Füllen des Freiraums mit der Kunststoffmasse die Polkappe in das Außengehäuse und/oder in das Werkzeug eingesetzt oder eingebracht und/oder positioniert.

Gemäß einer Weiterbildung wird das Außengehäuse in eine Gelenkaufnahme eines Gelenkaufnahmebauteils eingepresst. Bevorzugt erfolgt dabei das Komprimieren des Außengehäuses durch das Einpressen des Außengehäuses in die Gelenkaufnahme. Somit kann ein separater und der Montage des Gelenks in die Gelenkaufnahme vorgeschalteter Komprimierungsschritt entfallen. Das Gelenkaufnahmebauteil ist bevorzugt ein Radträger oder ein Fahrwerklenker, wie z.B. ein Längslenker oder Querlenker. Die Gelenkaufnahme ist oder wird bevorzugt durch ein Lagerauge oder durch eine in dem Gelenkaufnahmebauteil vorgesehene Ausnehmung gebildet, die beispielsweise durchgehend ist. Das Gelenkaufnahmebauteil wird insbesondere hergestellt und/oder bereitgestellt. Vorteilhaft besteht das Gelenkaufnahmebauteil aus Kunststoff und/oder aus Metall. Bevorzugt wird das Gelenkaufnahmebauteil aus Kunststoff und/oder aus Metall hergestellt.

Gemäß einer Ausgestaltung wird, vorzugsweise vor dem Einbringen des Kugelzapfens in das Außengehäuse, das Außengehäuse unter Ausbildung eines Ringbunds am Außenumfang des Außengehäuses umgeformt, wonach insbesondere das Außengehäuse in die Gelenkaufnahme eingepresst wird, bis der Ringbund an dem Gelenkaufnahmebauteil anliegt und/oder zur Anlage gelangt. Der Ringbund bildet in diesem Fall einen Anschlag. Beispielsweise wird der Ringbund durch Stauchen des Außengehäuses, insbesondere in axialer Richtung, ausgebildet.

Die Erfindung wird nachfolgend anhand bevorzugter Ausführungsformen unter Bezugnahme auf die Zeichnung beschrieben. In der Zeichnung zeigen:
Fig. 1 einen Längsschnitt durch ein in eine Gelenkaufnahme eingepresstes Kugelgelenk gemäß einer ersten Ausführungsform,
Fig. 2 eine Darstellung eines in Fig. 1 mit A bezeichneten Bereichs vor dem Einpressen des Kugelgelenks in die Gelenkaufnahme,
Fig. 3 einen Längsschnitt durch ein in eine Gelenkaufnahme eingepresstes Kugelgelenk gemäß einer zweiten Ausführungsform und
Fig. 4 eine Darstellung eines in Fig. 3 mit A bezeichneten Bereichs vor dem Einpressen des Kugelgelenks in die Gelenkaufnahme.

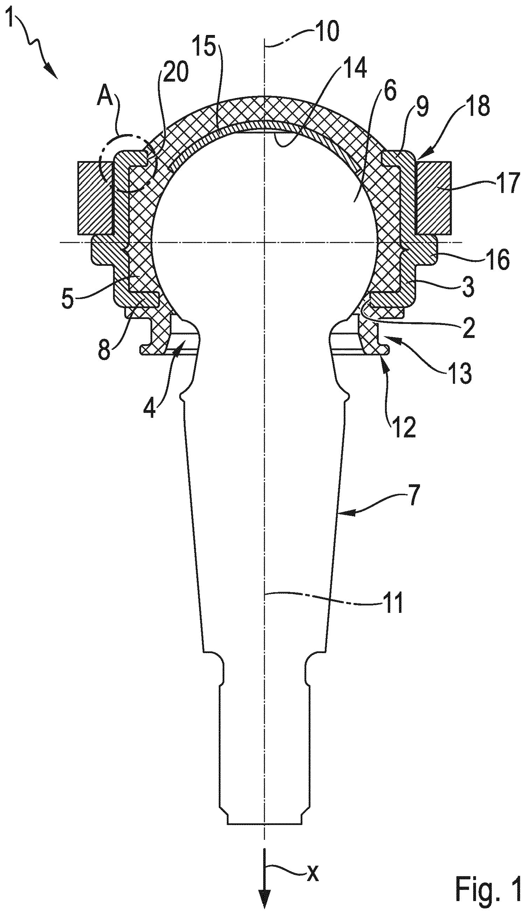

Aus Fig. 1 ist ein Längsschnitt durch ein Kugelgelenk 1 gemäß einer ersten Ausführungsform ersichtlich, welches ein mit einer Außengehäusezapfenöffnung 2 versehenes Außengehäuse 3 aus Blech, ein in dem Außengehäuse 3 angeordnetes und mit einer Innengehäusezapfenöffnung 4 versehenes Innengehäuse 5 aus Kunststoff und einen eine Gelenkkugel 6 umfassenden Kugelzapfen 7 aufweist, der mit seiner Gelenkkugel 6 beweglich in dem Innengehäuse 5 gelagert ist und sich durch die Innengehäusezapfenöffnung 4 hindurch aus dem Innengehäuse 5 heraus erstreckt.

Ein die Außengehäusezapfenöffnung 2 begrenzendes Ende 8 des Außengehäuses 3 ist nach Innen umgebogen und in den Kunststoff des Innengehäuses 5 eingebettet. Ferner ist ein der Außengehäusezapfenöffnung 2 abgewandtes Ende 9 des Außengehäuses 3 nach Innen umgebogen und in den Kunststoff des Innengehäuses 5 eingebettet. Das Ende 9 begrenzt dabei eine Montageöffnung 20 des Außengehäuses 3. Das Innengehäuse 5 ist somit in einer axialen Richtung x formschlüssig in dem Außengehäuse 3 gesichert. Ferner ist der Durchmesser der Außengehäusezapfenöffnung 2 kleiner als der Durchmesser der Gelenkkugel 6, sodass das die Außengehäusezapfenöffnung 2 begrenzende Ende 8 des Außengehäuses 3 die Gelenkkugel 6 in axialer Richtung x überdeckt. Der Durchmesser der Montageöffnung 20 ist hingegen größer oder gleich dem Durchmesser der Gelenkkugel 6.

Dem Außengehäuse 3 ist eine Mittelachse 10 zugeordnet, bezüglich welcher das Außengehäuse 3 rotationssymmetrisch ausgebildet ist. Auch das Innengehäuse 5 ist bezüglich der Mittelachse 10 rotationssymmetrisch. Ferner ist dem Kugelzapfen 7 eine Kugelzapfenachse 11 zugeordnet, bezüglich welcher der Kugelzapfen 7 rotationssymmetrisch ist. Gemäß dem in Fig. 1 dargestellten Zustand des Kugelgelenks 1 fällt die Kugelzapfenachse 11 mit der Mittelachse 10 zusammen.

Das Innengehäuse 5 umfasst einen die Innengehäusezapfenöffnung 4 umringenden und sich durch die Außengehäusezapfenöffnung 2 hindurch aus dem Außengehäuse 3 heraus erstreckenden Anschlussbereich 12, in dessen Außenumfang eine Ringnut 13 eingebracht ist. Diese Ringnut 13 dient zur Befestigung eines Dichtungsbalgs (nicht gezeigt). Ferner ist die Gelenkkugel 6 in einem der Außengehäusezapfenöffnung 2 abgewandten Polbereich 14 durch eine Polkappe 15 abgedeckt, die in das Innengehäuses eingebettet ist. Die Gelenkkugel 6 ist im Polbereich 14 flach ausgebildet.

Das Außengehäuse 3 weist an seinem Außenumfang einen Ringbund 16 auf, der an einem Gelenkaufnahmebauteil 17 anliegt, welches eine Gelenkaufnahme 18 in Form einer Ausnehmung aufweist, in welche das Außengehäuse 3 eingepresst ist.

Nachfolgend wird die Herstellung des Kugelgelenks 1 beschrieben. Zunächst werden das Außengehäuse 3 und der Kugelzapfen 7 hergestellt. Dann werden das Außengehäuse 3 und der Kugelzapfen 7 in ein Werkzeug (nicht gezeigt) eingesetzt, wobei der Kugelzapfen 7 in das Außengehäuse 3 eingebracht und mit seiner Gelenkkugel 6 in diesem positioniert wird, sodass zwischen dem Außengehäuse 3 und dem Kugelzapfen 7 ein die Gelenkkugel 6 und/oder den Kugelzapfen 7 umringender Freiraum verbleibt und sich der Kugelzapfen 7 durch die Außengehäusezapfenöffnung 2 hindurch aus dem Außengehäuse 3 heraus erstreckt. Der Kugelzapfen 7 wird dabei insbesondere in Richtung der Pfeils x durch die Montageöffnung 20 hindurch in das Außengehäuse 3 eingebracht. Ferner wird vorzugsweise die Polkappe 15 in das Außengehäuse 3 eingebracht und/oder in diesem positioniert. Anschließend wird der Freiraum mit einer Kunststoffmasse gefüllt und dabei die Gelenkkugel 6 mit der Kunststoffmasse umschlossen, die anschließend aushärtet und im ausgehärteten Zustand das Innengehäuse 5 bildet. Das Werkzeug ist z.B. ein Gusswerkzeug oder Spritzgusswerkzeug. Ferner ist das Werkzeug insbesondere derart ausgebildet, dass die Kunststoffmasse die oder annähernd die Form des Innengehäuses 5 annimmt.

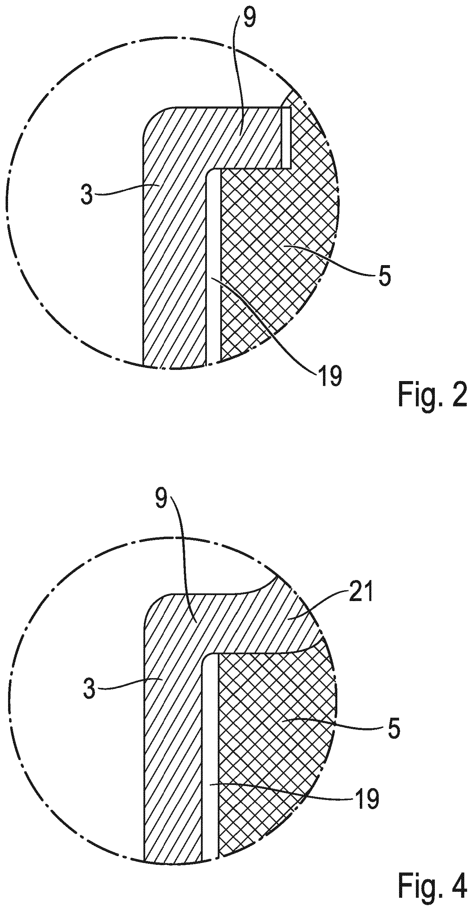

Aus Fig. 2 ist eine Darstellung des in Fig. 1 mit A bezeichneten Bereichs vor dem Einpressen des Außengehäuses 3 in die Gelenkaufnahme 18 ersichtlich. Es ist erkennbar, dass zwischen dem Außengehäuse 3 und dem Innengehäuse 5 ein Spalt 19 vorhanden ist, der sich beim Aushärten und/oder Abkühlen der Kunststoffmasse bildet. Dies liegt insbesondere daran, dass die Kunststoffmasse und/oder das Innengehäuse 5 und/oder der durch die Kunststoffmasse gebildete Körper während des Aushärtens bzw. Abkühlens der Kunststoffmasse schrumpft.

Anschließend wird das Kugelgelenk 1 mit seinem Außengehäuse 3 in die Gelenkaufnahme 18 des Gelenkaufnahmebauteils 17 eingepresst. Durch das Einpressen wird das Außengehäuse 3 derart verformt, das sich der Spalt 19 schließt.

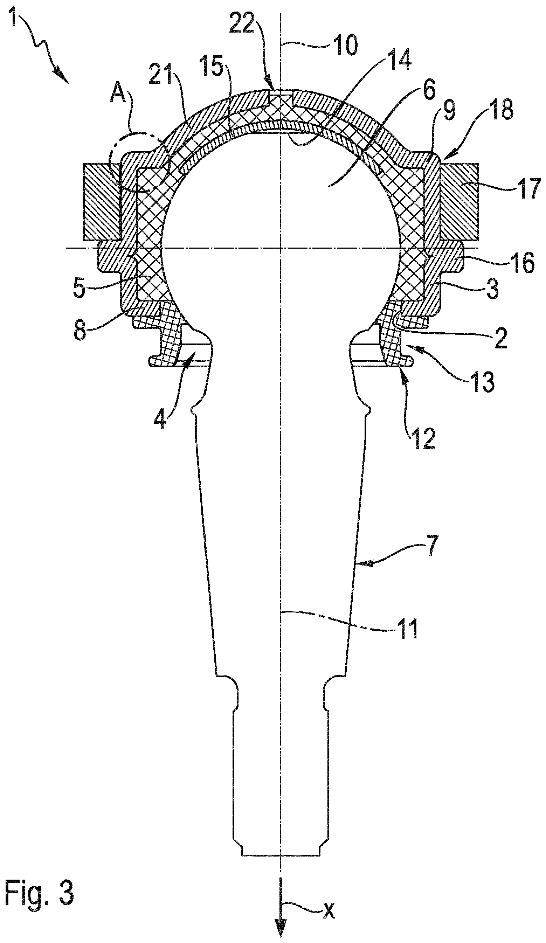

Aus Fig. 3 ist ein Längsschnitt durch ein Kugelgelenk 1 gemäß einer zweiten Ausführungsform ersichtlich, welches ein mit einer Außengehäusezapfenöffnung 2 versehenes Außengehäuse 3 aus Blech, ein in dem Außengehäuse 3 angeordnetes und mit einer Innengehäusezapfenöffnung 4 versehenes Innengehäuse 5 aus Kunststoff und einen eine Gelenkkugel 6 umfassenden Kugelzapfen 7 aufweist, der mit seiner Gelenkkugel 6 beweglich in dem Innengehäuse 5 gelagert ist und sich durch die Innengehäusezapfenöffnung 4 hindurch aus dem Innengehäuse 5 heraus erstreckt.

Ein die Außengehäusezapfenöffnung 2 begrenzendes Ende 8 des Außengehäuses 3 ist nach Innen umgebogen und in den Kunststoff des Innengehäuses 5 eingebettet. Das Innengehäuse 5 ist somit in einer axialen Richtung x formschlüssig in dem Außengehäuse 3 gesichert. Dabei ist der Durchmesser der Außengehäusezapfenöffnung 2 größer oder gleich dem Durchmesser der Gelenkkugel 6. Ferner ist ein der Außengehäusezapfenöffnung 2 abgewandtes Ende 9 des Außengehäuses 3 mit einem Boden 21 versehen, in dem eine Einfüllöffnung 22 vorgesehen ist.

Dem Außengehäuse 3 ist eine Mittelachse 10 zugeordnet, bezüglich welcher das Außengehäuse 3 rotationssymmetrisch ausgebildet ist. Auch das Innengehäuse 5 ist bezüglich der Mittelachse 10 rotationssymmetrisch. Ferner ist dem Kugelzapfen 7 eine Kugelzapfenachse 11 zugeordnet, bezüglich welcher der Kugelzapfen 7 rotationssymmetrisch ist. Gemäß dem in Fig. 3 dargestellten Zustand des Kugelgelenks 1 fällt die Kugelzapfenachse 11 mit der Mittelachse 10 zusammen.

Das Innengehäuse 5 umfasst einen die Innengehäusezapfenöffnung 4 umringenden und sich durch die Außengehäusezapfenöffnung 2 hindurch aus dem Außengehäuse 3 heraus erstreckenden Anschlussbereich 12, in dessen Außenumfang eine Ringnut 13 eingebracht ist. Diese Ringnut 13 dient zur Befestigung eines Dichtungsbalgs (nicht gezeigt). Ferner ist die Gelenkkugel 6 in einem der Außengehäusezapfenöffnung 2 abgewandten Polbereich 14 durch eine Polkappe 15 abgedeckt, die in das Innengehäuses eingebettet ist. Die Gelenkkugel 6 ist im Polbereich 14 flach ausgebildet.

Das Außengehäuse 3 weist an seinem Außenumfang einen Ringbund 16 auf, der an einem Gelenkaufnahmebauteil 17 anliegt, welches eine Gelenkaufnahme 18 in Form einer Ausnehmung aufweist, in welche das Außengehäuse 3 eingepresst ist.

Nachfolgend wird die Herstellung des Kugelgelenks 1 beschrieben. Zunächst werden das Außengehäuse 3 und der Kugelzapfen 7 hergestellt. Dann werden das Außengehäuse 3 und der Kugelzapfen 7 in ein Werkzeug (nicht gezeigt) eingesetzt, wobei der Kugelzapfen 7 in das Außengehäuse 3 eingebracht und mit seiner Gelenkkugel 6 in diesem positioniert wird, sodass zwischen dem Außengehäuse 3 und dem Kugelzapfen 7 ein die Gelenkkugel 6 und/oder den Kugelzapfen 7 umringender Freiraum verbleibt und sich der Kugelzapfen 7 durch die Außengehäusezapfenöffnung 2 hindurch aus dem Außengehäuse 3 heraus erstreckt. Der Kugelzapfen 7 wird dabei insbesondere entgegen der Richtung des Pfeils x durch die Außengehäusezapfenöffnung 2 hindurch in das Außengehäuse 3 eingebracht. Ferner wird vorzugsweise die Polkappe 15 in das Außengehäuse 3 eingebracht und/oder in diesem positioniert. Anschließend wird der Freiraum mit einer Kunststoffmasse gefüllt und dabei die Gelenkkugel 6 mit der Kunststoffmasse umschlossen, die anschließend aushärtet und/oder abkühlt und im ausgehärteten bzw. abgekühlten Zustand das Innengehäuse 5 bildet. Die Kunststoffmasse wird dabei insbesondere durch die Einfüllöffnung 22 hindurch in den Freiraum eingebracht. Das Werkzeug ist z.B. ein Gusswerkzeug oder Spritzgusswerkzeug. Ferner ist das Werkzeug insbesondere derart ausgebildet, dass die Kunststoffmasse die oder annähernd die Form des Innengehäuses 5 annimmt.

Aus Fig. 4 ist eine Darstellung des in Fig. 3 mit A bezeichneten Bereichs vor dem Einpressen des Außengehäuses 3 in die Gelenkaufnahme 18 ersichtlich. Es ist erkennbar, dass zwischen dem Außengehäuse 3 und dem Innengehäuse 5 ein Spalt 19 vorhanden ist, der sich beim Aushärten der Kunststoffmasse bildet. Dies liegt insbesondere daran, dass die Kunststoffmasse und/oder das Innengehäuse 5 und/oder der durch die Kunststoffmasse gebildete Körper während des Aushärtens und/oder Abkühlens der Kunststoffmasse schrumpft.

Anschließend wird das Kugelgelenk 1 mit seinem Außengehäuse 3 in die Gelenkaufnahme 18 des Gelenkaufnahmebauteils 17 eingepresst. Durch das Einpressen wird das Außengehäuse 3 derart verformt, das sich der Spalt 19 schließt.

### Bezugszeichen

- 1: Kugelgelenk
- 2: Außengehäusezapfenöffnung
- 3: Außengehäuse
- 4: Innengehäusezapfenöffnung
- 5: Innengehäuse
- 6: Gelenkkugel des Kugelzapfens
- 7: Kugelzapfen
- 8: axiales Ende des Außengehäuses
- 9: axiales Ende des Außengehäuses
- 10: Mittelachse des Außengehäuses
- 11: Kugelzapfenachse des Kugelzapfens
- 12: Anschlussbereich des Innengehäuses
- 13: Ringnut im Anschlussbereich
- 14: Polbereich der Gelenkkugel
- 15: Polkappe
- 16: Ringbund des Außengehäuses
- 17: Gelenkaufnahmebauteil
- 18: Gelenkaufnahme des Gelenkaufnahmebauteils
- 19: Spalt
- 20: Montageöffnung des Außengehäuses
- 21: Boden des Außengehäuses
- 22: Einfüllöffnung im Boden des Außengehäuses
- x: axiale Richtung

## Patentansprüche

1. Verfahren zur Herstellung eines Kugelgelenks (1), welches ein mit einer Außengehäusezapfenöffnung (2) versehenes Außengehäuse (3), ein in dem Außengehäuse (3) angeordnetes und mit einer Innengehäusezapfenöffnung (4) versehenes Innengehäuse (5) und einen eine Gelenkkugel (6) umfassenden Kugelzapfen (7) aufweist, der mit seiner Gelenkkugel (6) beweglich in dem Innengehäuse (5) gelagert ist und sich durch die Innengehäusezapfenöffnung (4) hindurch aus dem Innengehäuse (5) heraus erstreckt, wobei
- der Kugelzapfen (7) in das Außengehäuse (3) eingebracht und mit seiner Gelenckugel (6) in diesem positioniert wird, sodass zwischen dem Außengehäuse (3) und dem Kugelzapfen (7) ein die Gelenkkugel (6) und/oder den Kugelzapfen (7) umringender Freiraum verbleibt und sich der Kugelzapfen (7) durch die Außengehäusezapfenöffnung (2) hindurch aus dem Außengehäuse (3) heraus erstreckt,
- wonach der Freiraum mit einer Kunststoffmasse gefüllt und dabei die Gelenkkugel (6) mit der Kunststoffmasse umschlossen wird, die anschließend aushärtet und im ausgehärteten Zustand das Innengehäuse (5) bildet,
- **dadurch gekennzeichnet, dass** ein sich beim Aushärten der Kunststoffmasse zwischen dem Außengehäuse (3) und dem Innengehäuse (5) bildender Spalt (19) nach dem Aushärten durch Komprimieren des Außengehäuses (3) geschlossen wird.

2. Verfahren nach Anspruch 1, **dadurch gekennzeichnet, dass** vor dem Füllen des Freiraums mit der Kunststoffmasse ein die Außengehäusezapfenöffnung (2) begrenzendes Ende (8) des Außengehäuses (3) nach Innen umgebogen wird, wonach dieses Ende (8) beim Füllen des Freiraums mit der Kunststoffmasse in die Kunststoffmasse eingebettet wird.

3. Verfahren nach Anspruch 2, **dadurch gekennzeichnet, dass** vor dem Füllen des Freiraums mit der Kunststoffmasse ein der Außengehäusezapfenöffnung (2) abgewandtes Ende (9) des Außengehäuses (3) nach Innen umgebogen wird, wonach dieses Ende (9) beim Füllen des Freiraums mit der Kunststoffmasse in die Kunststoffmasse eingebettet wird.

4. Verfahren nach Anspruch 3, **dadurch gekennzeichnet, dass** der Kugelzapfen (7) durch das der Außengehäusezapfenöffnung (2) abgewandte Ende (9) des Außengehäuses (3) hindurch in das Außengehäuse (3) eingebracht wird.

5. Verfahren nach einem der Ansprüche 2 bis 4, **dadurch gekennzeichnet, dass** das die Außengehäusezapfenöffnung (2) begrenzende Ende des Außengehäuses (3) derart nach Innen umgebogen wird, dass die Außengehäusezapfenöffnung (2) einen Durchmesser aufweist, der kleiner als der Durchmesser der Gelenkkugel (6) ist.

6. Verfahren nach Anspruch 2, **dadurch gekennzeichnet, dass** das Außengehäuse (3) mit einem Boden (21) versehen wird, in dem eine Einfüllöffnung (22) vorgesehen wird, durch welche hindurch der Freiraum mit der Kunststoffmasse gefüllt wird.

7. Verfahren nach Anspruch 6, **dadurch gekennzeichnet, dass** der Kugelzapfen (7) durch das die Außengehäusezapfenöffnung (2) begrenzende Ende (8) des Außengehäuses (3) hindurch in das Außengehäuse (3) eingebracht wird.

8. Verfahren nach einem der vorangehenden Ansprüche, **dadurch gekennzeichnet, dass** beim Füllen des Freiraums mit der Kunststoffmasse die Gelenkkugel (6) bis auf einen den Kugelzapfen (7) umringenden Zapfenöffnungsbereich mit der Kunststoffmasse umschlossen wird, der nach dem Aushärten die Innengehäusezapfenöffnung (4) bildet.

9. Verfahren nach Anspruch 8, **dadurch gekennzeichnet, dass** beim Füllen des Freiraums mit der Kunststoffmasse ein den Zapfenöffnungsbereich umringender und sich durch die Außengehäusezapfenöffnung (2) hindurch aus dem Außengehäuse (3) heraus erstreckender Anschlussbereich (12) aus der Kunststoffmasse gebildet wird.

10. Verfahren nach Anspruch 9, **dadurch gekennzeichnet, dass** der Anschlussbereich (12) an seinem Außenumfang mit einer Ringnut (13) versehen wird.

11. Verfahren nach einem der vorangehenden Ansprüche, **dadurch gekennzeichnet, dass** vor dem Füllen des Freiraums mit der Kunststoffmasse die Gelenkkugel (6) in einem der Außengehäusezapfenöffnung (2) abgewandten Polbereich (14) durch eine Polkappe (15) abgedeckt wird, die beim Füllen des Freiraums mit der Kunststoffmasse in die Kunststoffmasse eingebettet wird.

12. Verfahren nach einem der vorangehenden Ansprüche, **dadurch gekennzeichnet, dass** das Außengehäuse (3) in eine Gelenkaufnahme (18) eines Gelenkaufnahmebauteils (17) eingepresst wird, wobei das Komprimieren des Außengehäuses (3) durch das Einpressen des Außengehäuses (3) in die Gelenkaufnahme (18) erfolgt.

13. Verfahren nach Anspruch 12, **dadurch gekennzeichnet, dass** vor dem Einbringen des Kugelzapfens (7) in das Außengehäuse (3) das Außengehäuse (3) unter Ausbildung eines Ringbunds (16) am Außenumfang des Außengehäuses (3) umgeformt wird, wonach das Außengehäuse (3) in die Gelenkaufnahme (18) eingepresst wird, bis der Ringbund (16) an dem Gelenkaufnahmebauteil (17) anliegt.

## Claims

1. Method for producing a ball joint (1) which has an outer housing (3) provided with an outer housing pivot opening (2), an inner housing (5) arranged in the outer housing (3) and provided with an inner housing pivot opening (4), and a ball pivot (7) comprising a joint ball (6), said ball pivot being mounted, by way of its joint ball (6), movably in the inner housing (5) and extending through the inner housing pivot opening (4) out of the inner housing (5), wherein
- the ball pivot (7) is introduced into the outer housing (3) and positioned therein by way of its joint ball (6), such that, between the outer housing (3) and the ball pivot (7), a free space which surrounds the joint ball (6) and/or the ball pivot (7) remains and the ball pivot (7) extends through the outer housing pivot opening (2) out of the outer housing (3),
- after which the free space is filled with a plastics composition and the joint ball (6) is thereby enveloped by the plastics composition, which subsequently cures and which, in the cured state, forms the inner housing (5),
- **characterized in that** a gap (19), which forms between the outer housing (3) and the inner housing (5) during the curing of the plastics composition, is closed by way of compression of the outer housing (3) after the curing.

2. Method according to Claim 1, **characterized in that**, prior to the filling of the free space with the plastics composition, an end (8) of the outer housing (3), said end delimiting the outer housing pivot opening (2), is bent inwards, after which said end (8) is embedded in the plastics composition during the filling of the free space with the plastics composition.

3. Method according to Claim 2, **characterized in that**, prior to the filling of the free space with the plastics composition, an end (9) of the outer housing (3), said end facing away from the outer housing pivot opening (2), is bent inwards, after which said end (9) is embedded in the plastics composition during the filling of the free space with the plastics composition.

4. Method according to Claim 3, **characterized in that** the ball pivot (7) is introduced into the outer housing (3) through that end (9) of the outer housing (3) which faces away from the outer housing pivot opening (2).

5. Method according to one of Claims 2 to 4, **characterized in that** that end of the outer housing (3) which delimits the outer housing pivot opening (2) is bent inwards in such a way that the outer housing pivot opening (2) has a diameter which is smaller than the diameter of the joint ball (6).

6. Method according to Claim 2, **characterized in that** the outer housing (3) is provided with a base (21) in which a filling opening (22) is provided, through which the free space is filled with the plastics composition.

7. Method according to Claim 6, **characterized in that** the ball pivot (7) is introduced into the outer housing (3) through that end (8) of the outer housing (3) which delimits the outer housing pivot opening (2).

8. Method according to one of the preceding claims, **characterized in that**, during the filling of the free space with the plastics composition, the plastics composition envelops the joint ball (6) except for a pivot opening region which surrounds the ball pivot (7), said region forming the inner housing pivot opening (4) after the curing.

9. Method according to Claim 8, **characterized in that**, during the filling of the free space with the plastics composition, a connection region (12) which surrounds the pivot opening region and which extends through the outer housing pivot opening (2) out of the outer housing (3) is formed from the plastics composition.

10. Method according to Claim 9, **characterized in that** the outer circumference of the connection region (12) is provided with an annular groove (13).

11. Method according to one of the preceding claims, **characterized in that**, prior to the filling of the free space with the plastics composition, the joint ball (6) is covered by a pole cap (15) in a pole region (14) which faces away from the outer housing pivot opening (2), said pole cap being embedded in the plastics composition during the filling of the free space with the plastics composition.

12. Method according to one of the preceding claims, **characterized in that** the outer housing (3) is pressed into a joint receptacle (18) of a joint receptacle component (17), wherein the outer housing (3) is compressed as a result of the outer housing (3) being pressed into the joint receptacle (18).

13. Method according to Claim 12, **characterized in that**, prior to the introduction of the ball pivot (7) into the outer housing (3), the outer housing (3) is formed so as to form an annular collar (16) on the outer circumference of the outer housing (3), after which the outer housing (3) is pressed into the joint receptacle (18) until the annular collar (16) bears against the joint receptacle component (17).

## Revendications

1. Procédé de fabrication d'une articulation à rotule (1) qui comporte un boîtier extérieur (3) pourvu d'une ouverture de pivot de boîtier extérieur (2), un boîtier intérieur (5) disposé dans le boîtier extérieur (3) et pourvu d'une ouverture de pivot de boîtier intérieur (4) et un pivot à rotule (7) qui comprend une rotule d'articulation (6) et qui est monté dans le boîtier intérieur (5) de manière mobile avec sa rotule d'articulation (6) et qui s'étend à travers l'ouverture de pivot de boîtier intérieur (4) hors du boîtier intérieur (5),
- le pivot à rotule (7) étant introduit dans le boîtier extérieur (3) et positionné dans celui-ci avec sa rotule d'articulation (6) de façon à ménager entre le boîtier extérieur (3) et le pivot à rotule (7) un espace libre entourant la rotule d'articulation (6) et/ou le pivot à rotule (7) et le pivot à rotule (7) s'étendant à travers l'ouverture de pivot de boîtier extérieur (2) hors du boîtier extérieur (3),
- après quoi l'espace libre étant rempli d'une matière synthétique et la rotule d'articulation (6) étant enrobée avec la matière synthétique qui durcit ensuite et forme le boîtier intérieur (5) à l'état durci,
- **caractérisé en ce qu'**un espace (19), qui se forme entre le boîtier extérieur (3) et le boîtier intérieur (5) pendant le durcissement de la matière synthétique, est fermé après le durcissement par compression du boîtier extérieur (3).

2. Procédé selon la revendication 1, **caractérisé en ce que**, avant le remplissage de l'espace avec la matière synthétique, une extrémité (8) du boîtier extérieur (3), laquelle délimite l'ouverture de pivot de boîtier extérieur (2), est pliée vers l'intérieur, après quoi cette extrémité (8) est enrobée dans la matière synthétique lors du remplissage de l'espace libre avec la matière synthétique.

3. Procédé selon la revendication 2, **caractérisé en ce que**, avant le remplissage de l'espace libre avec la matière synthétique, une extrémité (9) du boîtier extérieur (3), laquelle est opposée à l'ouverture de pivot de boîtier extérieur (2), est pliée vers l'intérieur, après quoi cette extrémité (9) est enrobée dans la matière synthétique lors du remplissage de l'espace avec la matière synthétique.

4. Procédé selon la revendication 3, **caractérisé en ce que** le pivot à rotule (7) est introduit dans le boîtier extérieur (3) à travers l'extrémité (9) du boîtier extérieur (3), laquelle est opposée à l'ouverture de pivot de boîtier extérieur (2).

5. Procédé selon l'une des revendications 2 à 4, **caractérisé en ce que** l'extrémité du boîtier extérieur (3), laquelle délimite l'ouverture de pivot de boîtier extérieur (2), est pliée vers l'intérieur de telle sorte que l'ouverture de pivot de boîtier extérieur (2) ait un diamètre qui est inférieur au diamètre de la rotule d'articulation (6).

6. Procédé selon la revendication 2, **caractérisé en ce que** le boîtier extérieur (3) est pourvu d'un fond (21) dans lequel est ménagée une ouverture de remplissage (22) par laquelle l'espace libre est rempli de la matière synthétique.

7. Procédé selon la revendication 6, **caractérisé en ce que** le pivot à rotule (7) est introduit dans le boîtier extérieur (3) à travers l'extrémité (8) du boîtier extérieur (3), laquelle délimite l'ouverture de pivot de boîtier extérieur (2).

8. Procédé selon l'une des revendications précédentes, **caractérisé en ce que**, lors du remplissage de l'espace libre avec la matière synthétique, la rotule d'articulation (6) est enfermée avec la matière synthétique à l'exception d'une zone d'ouverture de pivot qui entoure le pivot à rotule (7) et qui forme, après durcissement, l'ouverture de pivot de boîtier intérieur (4) .

9. Procédé selon la revendication 8, **caractérisé en ce que**, lors du remplissage de l'espace libre avec la matière synthétique, une zone de raccordement (12), qui entoure la zone d'ouverture de pivot et qui s'étend à travers l'ouverture de pivot de boîtier extérieur (2) hors du boîtier extérieur (3), est formée à partir de la matière synthétique.

10. Procédé selon la revendication 9, **caractérisé en ce que** la zone de raccordement (12) est pourvue, sur sa périphérie extérieure, d'une gorge annulaire (13).

11. Procédé selon l'une des revendications précédentes, **caractérisé en ce que**, avant le remplissage de l'espace libre avec la matière synthétique, la rotule d'articulation (6) est recouverte, dans une zone polaire (14) opposée à l'ouverture de pivot de boîtier extérieur (2), d'un capuchon polaire (15) qui est enrobé dans la matière synthétique lors du remplissage de l'espace libre avec la matière synthétique.

12. Procédé selon l'une des revendications précédentes, **caractérisé en ce que** le boîtier extérieur (3) est enfoncé dans un logement d'articulation (18) d'un élément de réception d'articulation (17), la compression du boîtier extérieur (3) étant effectuée par enfoncement du boîtier extérieur (3) dans le logement d'articulation (18) .

13. Procédé selon la revendication 12, **caractérisé en ce que**, avant l'introduction du pivot à rotule (7) dans le boîtier extérieur (3), le boîtier extérieur (3) est mis en forme pour former un bourrelet annulaire (16) sur la périphérie extérieure du boîtier extérieur (3), après quoi le boîtier extérieur (3) est enfoncé dans le logement d'articulation (18) jusqu'à ce que le bourrelet annulaire (16) vienne en appui sur l'élément de réception d'articulation (17).
